Europäisches Patentamt

European Patent Office

Office européen des brevets

(19)

(11) Publication number: **0 505 850 A1**

## (12) EUROPEAN PATENT APPLICATION

(21) Application number: **92104362.6**

(22) Date of filing: **13.03.92**

(51) Int. Cl.5: **B29C 67/22**, C08J 9/14, //B29K23/00

(30) Priority: **25.03.91 US 674193**

(43) Date of publication of application:
**30.09.92 Bulletin 92/40**

(84) Designated Contracting States:
**AT BE CH DE DK ES FR GB GR IT LI LU MC NL PT SE**

(71) Applicant: **BOEHRINGER INGELHEIM KG**

**W-6507 Ingelheim am Rhein(DE)**

(72) Inventor: **Ehrenfreund, Herbert**
**41 Yankee Peddler Path**
**Madison, Connecticut 06443(US)**

(74) Representative: **Freylinger, Ernest T.**
**Office de Brevets Ernest T. Freylinger 321,**
**route d'Arlon Boîte Postale 48**
**L-8001 Strassen(LU)**

(54) Method of making polymeric foams and expandable beads.

(57) A method of making expandable polymeric beads and polymeric foams wherein a lower aliphatic alcohol is employed as an expanding agent. The aliphatic alcohol is preferably isopropyl alcohol and the foamable polymer is preferably a polyolefin polymer.

A barrier material is included with the polymer in order to prevent the blowing agent from dissipating too quickly upon extrusion.

EP 0 505 850 A1

The present invention relates to a method of making polymeric foams by the extrusion and structural foam molding processes and to the production of expandable beads. In particular, it relates to the use of a new expanding or foaming agent for ethylenic and foam extrusion and ethylenic foamable beads for use in the foam molding process.

Structural foam processing and extrusion processing basically involve the formation of a foam or expanded product from a mixture of a foamable polymer, a nucleating agent and a blowing or expanding agent. In the case of extrusion processing, the three ingredients are thoroughly mixed in an extruder and kept under pressure until the mixture exits the extruder die whereupon the blowing agent becomes gaseous, and attaches to the nucleating agent and forms a cellular structure. The structural foam molding process is similar, however the mixture is injected into a mold wherein it is expanded by the blowing agent to form a cellular structure which fills the mold cavity. The expandable foam molding process is a variation of foam molding wherein ethylenic beads containing a blowing agent are subjected to heat in a mold which causes them to expand from 2 to 50 times their original size. The percent of expansion is controlled by the time and temperature relationship.

In both the extrusion process and the structural foam process, as well as in the case of expandable beads, the size of the cells of the cellular structure produced and the number of cells are primarily controlled by the amount of nucleating agent used, while the density of the foam is primarily controlled by the amount and type of blowing agent used.

In the processing of low density foams (density below about 10-15 lbs. / cu.ft. / i.e. 160-240 kg/m$^3$), the blowing agents of choice have been chloroflurocarbons and hydrocarbons. The chloroflurocarbons that have gained the widest acceptance are the fully halogenated type, commonly known as CFCs. In recent years, however, it has been established that the use of CFCs contribute to the thinning of the earth's ozone layer. Of late, HCFCs (not fully halogenated chloroflurocarbons) have been substituted for the CFCs as they are less harmful to the ozone layer. While hydrocarbons per se do not appear to effect the ozone layer, the use of these materials are regulated like other volatile compounds because of their harmful effect on the air quality of the lower atmosphere and their flammability.

The object of the present invention is to provide a method of making polymeric foams and expandable beads which does not employ CFCs, HCFCs and/or harmful hydrocarbons as a blowing agent.

In accordance with the method of the present invention, a polymeric material such as a polyolefin is mixed with a suitable nucleating agent, a barrier material and a lower aliphatic alcohol blowing agent.

In one embodiment of the invention, expandable beads are produced from said mixture.

In another embodiment of the invention, said mixture is charged to an extruder and extruded through a die or into a suitable mold to form a foamed polymer.

It will be appreciated that the present invention provides a method of making ethylenic polymer foam using a lower aliphatic alcohol as a blowing agent.

This method can e.g. be used to produce polyolefin foams by extrusion processing and structural foam processing techniques wherein the only blowing agent employed is a lower aliphatic alcohol, preferably isopropyl alcohol.

It can also be used to produce expandable olefinic beads having a lower aliphatic alcohol blowing agent incorporated therein for use in expandable foam molding techniques.

The polymeric foams produced by the present invention are preferably olefinic polymer foams, which may be formed from polymers or copolymers. For example, the olefinic polymer is preferably polyethylene.

The blowing agent or expanding agent used in the present invention is a lower aliphatic alcohol such as methyl alcohol, ethyl alcohol, propyl alcohol, isopropyl alcohol and butyl alcohol. Isopropyl alcohol is the preferred blowing agent.

The blowing agent of the present invention is employed in amounts of from about 3 wt. % to about 15 wt. %

Experimentation has shown that said amounts of alcohol blowing agent used in the present invention are from about 20% to 30% less than amounts of HCFC used in the prior art.

It has been found that due to the increased solubility of the lower aliphatic alcohols in the polymer melt, it is necessary that barrier means be included with the polymer in order to prevent the blowing agent from dissipating too quickly upon extrusion which will result in cell collapse and inferior foam. It is believed that the barrier material slows down the migration of the blowing agent from the cells to ambient so that the infusion of air replaces the outgoing blowing agent at about the same rate of tranfer, thus preventing foam collapse during aging after forming. To this end, barrier materials such as ionmers, acrylics and monodiglycerates are employed in amounts of from about 0.1 wt. % to about 2.0 wt. %. In addition, it is desirable that the pressure in the extrusion system be maintained at a level which is lower than that when producing a polymeric foam using HCFCs. This increases the gas present in the polymer melt and lowers the viscosity of same thus resulting in higher blow during forming. This permits the use of decreased levels of blowing agent.

The method of the present invention will best be illustrated by the following examples wherein foam samples were made using a 2 1/2 inch (about 63 mm) diameter, 40:1 length to diameter extruder. The barrel length of the extruder is divided into 5 heating zones. Heating zones 1, 2 and 3 are using to melt and meter the polymer to be extruded. The expanding agent is introduced into the melt near the end of zone 3 where it is mixed and absorbed into the polymer melt. Zones 4 and 5 are oil temperature controlled heating zones which are provided with a suitable heat exchanger. An extruder adapter and a die adapter are affixed to the end of the extruder and provide for 2 more separate electrically heated zones. The die which is affixed to the die adapter is oil temperature controlled. A water cooled sizing drum and a winder are located downstream of the die.

## EXAMPLES

Various samples of extrudable polyethylene polymer were prepared as follows:

**Sample 1** - 50 lbs. of Norchem 953 - a polyethylene polymer having a density of 0.915 and a melt index of 2.0 g./10 mins. made by Northern Petrochemical Company (U.S.A).

0.25 wt. % of talc

0.20 wt. % of Atmos 150 - a monodiglycerate made by ICI Chemical Company (U.S.A.)

**Sample 2** - same as Sample 1 with the addition of 0.1 wt. % of BIH-70-a sodium bicarbonate/citric acid nucleating agent made by Boehringer Chemical Company (U.S.A.)

**Sample 3** - 50 lbs. of Norchem 955 - a polyethylene polymer having a density of 0.918 and a melt index of 2.0 g./10 min. made by Northern Petrochemical Company 0.2 wt.% of Atmos 150

1.0 wt. % of Surlyn 9020 - an ionomer made by DuPont Chemical Company (U.S.A.)

0.5 wt % of K120D, an acrylic powder made by Rohn and Hass Company (U.S.A.)

0.1 wt. % talc

0.1 wt. % BIH-70

**Sample 4** - 50 lbs. of Norchem 952 - a polyethylene polymer having a density of 0.918 and a melt index of 2.0 g./10 mins. made by Northern Petrochemical Company 0.2 wt. % BIH-70

0.13 wt. % Kenamide S180 - a diglycerate made by Humko Chemical Division of Witco Corporation (U.S.A.) 0.13 wt. % Atmos 150

**Sample 5** - 100 lbs. of Norchem 953

0.75 wt. % of BIH-70

0.15 wt. % of Kenamide S180

1.0 wt. % of Surlyn 9020

**Sample 6** - 50 lbs. of USI NA-212 - a polyethylene polymer having a density of 0.915 and a melt index of 12 g./10 min. made by USI Chemical Company (U.S.A.)

2.0 wt. % of BIH-70

0.15 wt. % of Kenamide S180

1.0 wt. % of Surlyn 9020.

The above-noted Samples were charged to the above-noted extruder and extruded with the addition of a blowing agent at a rate of 60 lbs./hour. The results are as follows:

| | EXAMPLES | | | | | | | | | | |
|---|---|---|---|---|---|---|---|---|---|---|---|
| SAMPLE NUMBER | 1 | 2 | 3 | 4 | 5 | 6 | 7 | 8 | 9 | 10 | 11 |
| | 2 | 1 | 3 | 4 | 4 | 4 | 5 | 5 | 5 | 6 | 6 |
| Zone 1 (°F) | 275 | 275 | 275 | 325 | 325 | 325 | 300 | 300 | 300 | 300 | 300 |
| Zone 2 (°F) | 330 | 330 | 360 | 330 | 330 | 330 | 330 | 330 | 330 | 330 | 330 |
| Zone 3 (°F) | 320 | 320 | 360 | 320 | 320 | 320 | 320 | 320 | 320 | 320 | 310 |
| Zone 4 (°F) | 320 | 320 | 250 | 300 | 300 | 300 | 300 | 300 | 300 | 300 | 290 |
| Zone 5 (°F) | 230 | 234 | 226 | 261 | 242 | 232 | 254 | 247 | 247 | 242 | 229 |
| Zone 6 (°F) | 230 | 234 | 226 | 261 | 242 | 232 | 254 | 247 | 247 | 242 | 229 |
| Adapter (°F) | 230 | 225 | 235 | 225 | 225 | 220 | 230 | 230 | 230 | 230 | 230 |
| Die (°F) | 203 | 204 | 235 | 220 | 220 | 200 | 220 | 220 | 220 | 200 | 215 |
| R.P.M. | 30 | 30 | 15 | 20 | 20 | 20 | 20 | 20 | 20 | 20 | 20 |
| Head Pressure ($\#/in.^2$) | 1600 | 1400 | 1600 | 1150 | 1200 | 1400 | 1300 | 1300 | 1200 | 1000 | 1050 |
| Injection Pressure ($\#/in.^2$) | 1420 | 1350 | 1400 | 1450 | 1570 | 2000 | 1200 | 1200 | 1050 | 1050 | 1040 |
| Blowing Agent* | IPA | F-114 | F-114 | IPA | IPA | F-114 | IPA | IPA | F-114 | F-114 | IPA |
| Blowing Agent Injection Rate (Gallons (U.S.)/hr.) | .9 | .9 | .9 | .75 | .75 | .6 | .72 | .72 | .6 | .72 | .54 |

*F-114, freon F-114 made by Dupont Chemical Corp.

IPA, isopropyl alcohol

In the above examples, good foam with small cells were produced in examples 1, 3, 7 and 10 using the HCFC Freon F-114. A larger cell foam, with some collapse, using the same F-114 blowing agent was produced in Example 4.

Good foam with small cells was produced in examples 2, 5, 6, 8, 9 and 11 wherein an IPA blowing agent was employed with a barrier material. Some cell collapse was noted in examples 5, 8 and 11.

As demonstrated by the above examples, polyolefin foam having good cell size can be produced using isopropyl alcohol and a barrier material for preventing collapse during extrusion.

A sample of expandable polyolefin beads was prepared as follows:

**Sample 7** - 50 lbs. of USI A-212- a polyethylene polymer 0.2 wt. % of BIH-70
0.15 wt. % of Kenamide S-180
1.0 wt. % of Surlyn 9020

The above-noted Sample was charged to the above-noted extruder and extruded with the addition of a blowing agent as beads. The results are as follows:

|  | EXAMPLES | |
| --- | --- | --- |
|  | 12 | 13 |
| SAMPLE NUMBER | 7 | 7 |
| Zone 1 ($^\circ$F) | 300 | 300 |
| Zone 2 ($^\circ$F) | 330 | 330 |
| Zone 3 ($^\circ$F) | 310 | 310 |
| Zone 4 ($^\circ$F) | 290 | 290 |
| Zone 5 ($^\circ$F) | 232 | 229 |
| Zone 6 ($^\circ$F) | 232 | 229 |
| Adapter ($^\circ$F) | 230 | 230 |
| Die ($^\circ$F) | 215 | 215 |
| R.P.M. | 20 | 20 |
| Head Pressure ( /in.$^2$) | 1050 | 1050 |
| Injection pressure ( /in.$^2$) | 1050 | 1040 |
| Blowing Agent * | F-114 | IPA |
| Blowing Agent Injection Rate (Gallons (U.S.)./hr.) | .72 | .54 |

* F-114, Freon F-114 made by Dupont Chemical Corp., IPA, isopropyl alcohol

The beads produced in Example 12 were large and round and showed no collapse. The beads produced in Example 13, while showing same collapse, were aged for 48 hours and then molded in a steam chest molding machine which resulted in good bead fusion in the molded part.

## Claims

1. A method of making a polymeric foam characterized by charging an extruder with a mixture of a foamable polymer, a nucleating agent and a barrier material, melting said mixture in said extruder, adding a lower aliphatic alcohol blowing agent to said melted mixture and extruding said melted mixture through a die to form said foam.

2. The method of claim 1 characterized in that said foamable polymer is a polyolefin polymer.

3. The method as claimed in claim 1 or 2 characterized in that said lower aliphatic alcohol blowing agent is isopropyl alcohol.

4. The method as claimed in anyone of claims 1 to 3 characterized in that said barrier material is a member of the group consisting of ionomers, acrylic powders and monodiglycerates.

5. The method as claimed in anyone of claims 1 to 4 characterized in that said blowing agent is present in amounts of from about 3 wt. % to about 15 wt. % and said barrier material is present in amounts of from about 0.1 wt. % to about 2.0 wt. %.

6. The method as claimed in claim 2 characterized in that said polyolefin polymer is polyethylene.

7. A method of making expandable polyethylene beads characterized by charging an extruder with a mixture of polyethylene, a nucleating agent and a barrier material, melting said mixture in said extruder, adding a lower aliphatic alcohol agent to said melted mixture and extruding said melted mixture so as to form expandable beads.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 417 405 (HERMANN BERSTORFF MASCHINENBAU GMBH) <br> * column 1, line 43 - line 53; claims 1-6; figures 1,2 * | 1-6 | B29C67/22 <br> C08J9/14 <br> //B29K23:00 |
| X | CHEMICAL ABSTRACTS, vol. 84, no. 2, 12 January 1976, Columbus, Ohio, US; abstract no. 6076K, page 52 ; column 84 ; & JP-A-50102663 (FURUKAWA ELECTRIC COMPANY) <br> * abstract * | 1,2,6 | |
| X | WORLD PATENTS INDEX <br> Week 6800, <br> Derwent Publications Ltd., London, GB; <br> AN 68-07881Q <br> & JP-B-43 013 875 (NITTO ELECTRIC IND. CO. LTD.) 11 June 1968 <br> * abstract * | 1 | |
| A | EP-A-0 363 535 (THE DOW CHEMICAL COMPANY) <br> * page 3, line 1 - line 8 * <br> * page 3, line 33 - line 37 * <br> * page 3, line 58 - page 4, line 4 * <br> * page 4, line 27 - line 32; examples 2,4,6 * | 4,5 | TECHNICAL FIELDS SEARCHED (Int. Cl.5) <br><br> C08J <br> B29C |
| A | US-A-3 644 230 (E.W. CRONIN) <br> * column 1, line 28 - line 42 * <br> * column 1, line 62 - line 67; claims 1-3 * | 4,5 | |
| A | PATENT ABSTRACTS OF JAPAN <br> vol. 10, no. 296 (C-377)(2352) 8 October 1986 <br> & JP-A-61 113 627 ( ASAHI CHEM IND CO LTD ) 31 May 1986 <br> * abstract * | 1,7 | |

-/--

The present search report has been drawn up for all claims

| Place of search | Date of completion of the search | Examiner |
|---|---|---|
| THE HAGUE | 29 JUNE 1992 | VAN NIEUWENHUIZE O. |

EPO FORM 1503 03.82 (P0401)

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | WORLD PATENTS INDEX<br>Week 6800,<br>Derwent Publications Ltd., London, GB;<br>AN 68-10950Q<br>& JP-B-43 018 477 (T. HIROSE) 7 August 1968<br>* abstract *<br><br>----- | 1 | |

TECHNICAL FIELDS
SEARCHED (Int. Cl.5 )

The present search report has been drawn up for all claims

| Place of search | Date of completion of the search | Examiner |
|---|---|---|
| THE HAGUE | 29 JUNE 1992 | VAN NIEUWENHUIZE O. |